# EUROPEAN PATENT SPECIFICATION

(11) **EP 2 140 336 B1**
(45) Date of publication and mention of the grant of the patent: **29.10.2014**
(21) Application number: 07821971.4
(22) Date of filing: 29.10.2007
(51) Int. Cl.: G06F 3/01

(54) **FORCE FEEDBACK FOR INPUT DEVICES**
KRAFTRÜCKMELDUNG FÜR EINGABEEINRICHTUNGEN
RETOUR DE FORCE POUR DES DISPOSITIFS D'ENTRÉE

(30) Priority: 28.03.2007 US 692415
(43) Date of publication of application: 06.01.2010
(73) Proprietor: Sony Ericsson Mobile Communications AB, 221 88 Lund (SE)
(72) Inventor: KLINGHULT, Gunnar, S-223 59 Lund (SE); WERNERSSON, Mats, S-252 63 Helsingborg (SE)
(74) Representative: Aurell, Henrik
(86) International application number: PCT/EP2007/061615
(87) International publication number: WO 2008/116505

(56) References cited:
- DE-A1- 19 962 552
- US-A- 5 165 897
- US-A- 5 986 643
- US-A1- 2003 181 116

## Description

### Technical field of the invention

The present invention relates generally to mobile terminals and, more particularly, to an input system, an input device, and a method for providing a tactile feedback to a users finger when inputting information and/or commands in such terminals.

### State of the art

Devices are used in portable electronic terminals, such as cellular phones, lap tops and music players, e.g. MP3-players, for inputting data and/or information in such electronic terminals and also to steer/control these terminals. Furthermore, input devices are also used for moving a cursor, e.g. linearly and/or cross-wise, anywhere on a display of such electronic terminals, e.g. by moving a joystick or a navigating pad for example in the form of a SlidePad button. The most common devices for inputting and/or controlling portable electronic terminals are keys, i.e. single keys and/or joysticks and/or key or navigating pads/boards, and/or touch sensors, and/or touch-sensitive displays. These input devices form the so called Man Machine Interface of the electronic terminal.

Today many input devices deliver a certain feel or sensation, i.e. when a key or a navigating pad is depressed and/or when a SlidePad button and/or a joystick is moved. In a laptop or cellular phone with a joystick, the joystick may give the user a slow/inert feeling or feedback when used.

DE 19962552 A1 discloses a touch screen that comprises several single-screen interface elements. In one embodiment of the disclosure, the screens are moveable by the use of muscle wires in order to provide tactile feedback to a user.

These prior art input devices exhibit disadvantages, e.g. they are in some cases not endurable and silent enough, they require too much space, especially in view of the building height, they are in some cases difficult to control in that they may be too slow or too fast in response to manual actuation. These disadvantages make prior art input devices difficult to handle, bulky and often costly.

### Summary of the invention

In the present invention, the drawbacks of prior art input devices are solved by providing a portable electronic terminal with a input device using so called muscle wires that is made of shape changing metal, i.e. memory metal, and biasing means, and means for activating these muscle wires together, whereby better and/or more cost efficient keys, keyboards, joysticks, SlidePad buttons and touch sensors are developed.

In the present invention, the problem of providing tactile feedback from a touch sensor is solved by providing a input device with at least three so called muscle wires, which are elongate pieces of memory metal, and biasing means, and means for activating the muscle wires when the input device is used, thereby creating a tactile/force feedback.

According to one aspect of the present invention an input device is provided, which is provided with means for detecting the touch of a finger and means for providing a tactile feedback to the finger to acknowledge an activation of a touch surface of the input device, characterized in that the means for providing a tactile feedback comprises at least three elongate objects of shape memory metal, each of the objects being arranged to cooperate operatively with at least one biasing means and to contract in a different direction than the other elongate objects of shape memory metal when providing the tactile feedback to the finger.

According to another aspect an input device is provided, wherein the elongate objects of shape memory metal are muscle wires arranged to be energised in response to the touch by a finger such that the wires contract in different directions and tactile feedback in the form of mechanical energy resulting from the differently directed contractions is mediated to the touch surface, arranged to make contact with the finger.

According to another aspect an input device is achieved, wherein each of the muscle wires is arranged to convey a motion directed from the touch surface.

According to yet another aspect an input device is provided, wherein each of the biasing means is arranged to convey a motion directed from the touch surface.

According to another aspect an input device is provided, wherein each muscle wire and its associated biasing means are arranged in parallel with each other.

In accordance with yet another aspect an input device comprises four muscle wires, independently controllable, arranged in pairs, wherein each pair is arranged to convey a motion of the touch surface in one plane, which planes are perpendicular to each other.

In accordance with another aspect an input device is provided, wherein the muscle wires in each pair are arranged to convey a motion of the touch surface in opposite directions to each other.

According to another aspect an input device is provided, where the conveying of a motion is achieved by attaching a first end of each wire at the touch surface and attaching a second end of each wire to an anvil for enabling the conveying of the increased tension in the muscle wire to the touch surface.

In accordance with yet another aspect an input device is provided, where a first end of each biasing means is attached at the touch surface and a second end of each biasing means is attached to an anvil for enabling the biasing means to cooperate with the associated muscle wire and to at least partly counteract the contraction of the other muscle wires.

According to one aspect a method for providing a tactile feedback to a finger through a touch surface on an input device is provided, comprising: detecting a touch of the finger, converting the touch of the finger into a signal corresponding thereto characterized in that the method further comprises: providing power to at least one of at least three elongate memory metal objects, each being arranged to cooperate operatively with at least one biasing means, connected to the touch surface upon receipt of the signal; and moving the touch surface by means of the at least one of said at least three memory metal object exerting a force on the touch surface and said at least one biasing means exerting a force in a direction other than the force exerted by the at least one memory metal object, in response to the power being provided to the memory metal object such that a tactile feedback for the finger is achieved when touching the surface.

According to still another aspect a method for providing a tactile feedback to a finger through a touch surface on an input device is provided, comprising: empowering three memory metal objects in different directions, such that the tactile feedback for the finger is achieved when touching the surface.

In accordance with another aspect a method for providing a tactile feedback to a finger through a touch surface on an input device is provided, comprising: empowering four memory metal objects in pairs such that each pair of memory metal objects actuates a motion of the touch surface in one plane being perpendicular to the other plane.

The muscle wire withstands mechanical shocks better and also provides a better, faster and more accurate output response when activated, thereby giving a SlidePad button and/or a joystick a better tactile feedback. Moreover, muscle wires are silent, provide a low building height, they are fast, and the force and the speed of the force can be controlled electrically. Furthermore, alerting vibration is also possible. Furthermore, the invention is also reliable and cost effective as the number of mechanical parts is few.

It should be emphasised that the term "comprises/comprising" when used in this specification is taken to specify the presence of stated features, integers, steps or components but does not preclude the presence or addition of one or more other features, elements, integers, steps, components or groups thereof.

### Brief description of the drawings

The invention will be described in detail below with reference to the accompanying drawings, in which:
Fig. 1 shows an input device coupled to muscle wiring and biasing means, according to one embodiment of the invention,
Fig. 2 shows the input device coupled to muscle wiring and biasing means according to another embodiment of the invention,
Fig 3 shows a portable electronic terminal equipped with an input device according to the invention,
Fig 4 shows a diagram of one type of driving circuitry for muscle wiring in the input device according to the invention.

### Detailed description of preferred embodiments

A typical input device consists of a SlidePad, a key or key pad, a joystick, a touch-sensitive area, e.g. a touch-sensitive display and/or finger strokable area or pushable pin, such as used in a lap top computer, which means are operatively connected to a control unit or processor that in response to actuation and/or touches convert these into analogue or digital signals. This is known technology and will not be explained in further detail.

Moreover, in this description, the term muscle wire is used to denote an elongate object of shape changing memory metal, e.g. nickel-titanium (Ni-Ti) alloy, see e.g. the trademarks Nitinol and Flexinol. The muscle wire in accordance with the invention may of course have other shapes, e.g. a band- or ribbon-like shape so that the wire may roll (coil) itself up or unroll when changing its shape, a rod or bar shape, or a string/cord/cable shape, and different cross-sections, e.g. circular, triangular, square, star or any other suitable cross-section. The function and performance of these types of memory metal parts or wires are explained further later on in this description.

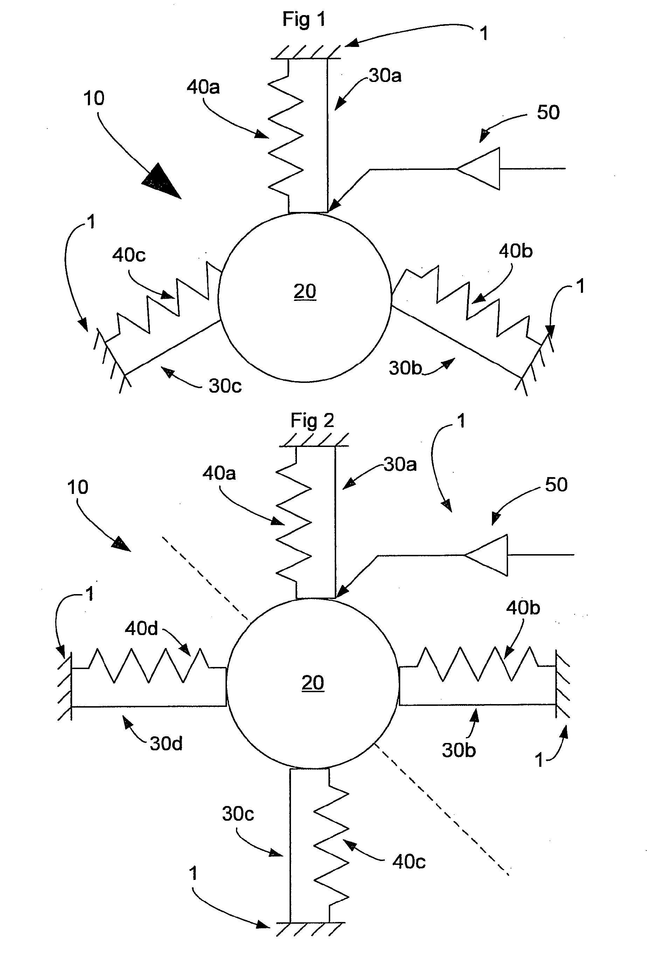

Figs 1 and 2 shows an input system using an input device 10 for inputting information, commands in a portable electronic terminal 1 and/or moving/steering a cursor on a display by means of an input organ 20, e.g. a button, a key and/or a joystick. The input organ 20 will be described as a button for simplicity throughout the description and the button 20 is connected to the electronic terminal 1 by means of a spring (not shown), so that it will always return to its central position when not touched and/or actuated by a users finger. Moreover, the button 20 is also operatively connected to the electronic terminal 1 to be able to input commands and/or data, this being known technology and will not be explained in detail.

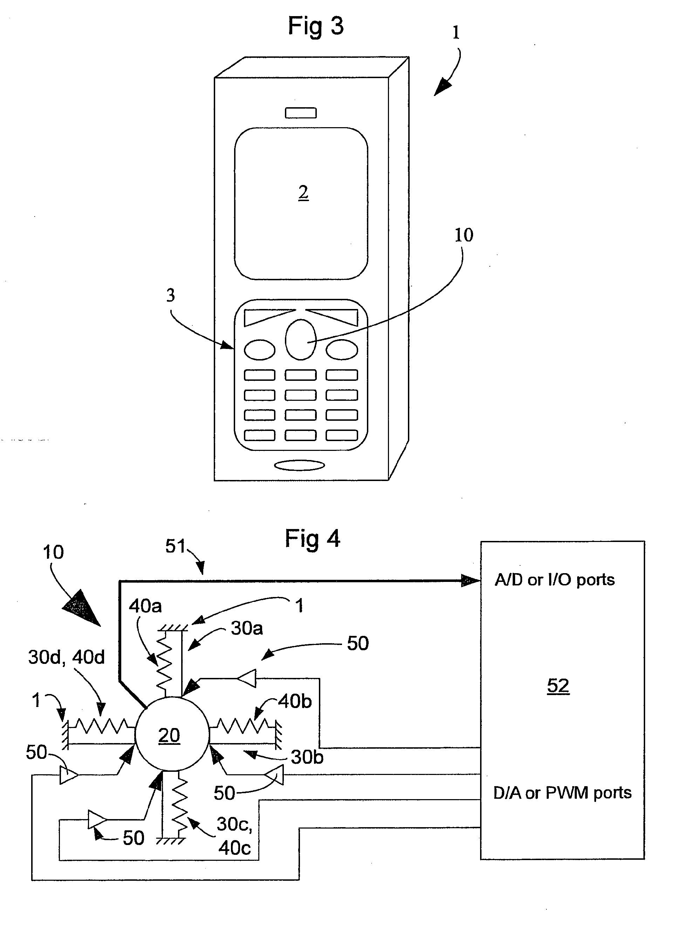

Fig 1 shows a first embodiment of the input device 10 with three elongate objects of memory metal 30a, 30b, 30c and fig 2 shows a second embodiment of the input device 10 with four elongate objects of memory metal 30a, 30b, 30c, 30d. The input device 10 is mounted in the portable electronic terminal 1 at suitable positions for input, e.g. below and/or above a LCD display 2 and/or beside a key pad or as a part of the key pad 3 as in known devices, e.g. as shown in Fig 3.

In the embodiment of fig 1, the input device 10 comprises the three memory metal parts 30a, 30b, 30c, i.e. muscle wires, connected to one control power source unit 50 configured to control and supply power to the wires 30 in response to detected touching of the button 20, which detection is transformed into signals that are used for empowering the associated muscle wire in response to the received signals, the power source unit 50 is shown in more detail in fig 4. Here, there is provided one power source unit 50 for each muscle wire 30a, 30b, 30c, 30d. In other embodiments, there could be more than one wire to be empowered by each power source, whereby a pair of wires for each power source, and/or the power sources could also be coupled in parallel at the same side of the button/joystick 20 to save space. The button is movable in any direction, but preferably in the x- and y-direction, and in some applications also movable in the z-direction. Each muscle wire 30 is operatively connected to a biasing means 40, in this embodiment in the form of a spring, and arranged in parallel with this spring, and also operatively connected at a first end to the button 20 and attached at a second end to an anvil, in this embodiment, a sufficiently steady part of the electronic terminal 1 for enabling the conveying of the increased tension in the muscle wire to the touch surface of the button 20. The springs 40a, 40b, 40c are mounted in the same way as the muscle wires.

The muscle wires 30a, 30b, 30c, 30d and their associated springs 40a, 40b, 40c, 40d in figs 1 and 2 are orientated in the same plane, i.e. the plane of the figures with an angle of about 120° in relation to each other in fig 1 and with an angle of 90° in fig 2, as seen in a circle of 360°. This angle may be chosen differently, either as a symmetrical or unsymmetrical pattern or distribution, i.e. if more than four muscle wires are to be used, e.g. five muscle wires an angle of 72° can be used or if six muscle wires are used an angle of 60° can be used, or, if desired, as an example when using six muscle wires, the muscle wires in the right lower quadrant, two muscle wires are shown schematically as two dotted lines in fig 2, are distributed with an angle of 45°, the same goes for the left upper quadrant, while the muscle wires forming the right upper and the left lower quadrant are distributed with an angle of 90° between them.

When power is supplied to each wire 30, the wire is configured to exert a force on the button 20 to actuate it as an alert or vibration for the user, e.g. when in gaming mode, or to provide a tactile feedback to the finger from the touch surface of the button. The wires may be empowered separately and independently, in pairs, alternately, or in any suitable manner, e.g. by using pulse width modulation (PWM) for best switching efficiency, wherein the modulation corresponds to the force. The contracting force will then be proportional to the average current in the wire. The empowering of each wire 30a, 30b, 30c, 30d is done by heating a first wire so that it contracts in one direction by supplying power and when the power supply to the wire is interrupted, the wire cools and a second wire is supplied with power so that it is heated and contracts, thereby extending the first wire by pulling in the opposite direction of contraction for this first wire. This control of the alternating wire contractions may achieve an alternating motion for the button 20, thereby providing tactile feedback to a finger. The movement of the button 20 is fed, i.e. coupled back by means of a feedback loop 51 to the associated muscle wires wire 30a, 30b, 30c, 30d via a control unit 52, such that the actuation of the button by means of the wires are exactly controlled. The feedback of the signals from the button 20 is performed electrically. This is done by using adjustable/variable resistance, i.e. resistance that are adjusted in response to movement of the button 20, capacitive/electrostatic feedback or optical feedback for controlling/displaying the movement and position of one or more cursors on the display 2. More than one wire at a time may be empowered, i.e. two (a pair) or more wires may be empowered in parallel, but the preferred way of empowering the wires is serially.

Fig 4 shows the power source unit 50 comprising, in this embodiment, four power amplifiers 50, i.e. one power amplifier 50 operatively connected to each of the four muscle wires 30a, 30b, 30c, 30d. These four power amplifiers 50 are separately empowered and controlled by the control unit 52 having digital/analogue (DA) or PWM ports operatively coupled to each power amplifier 50 for actuation and analogue/digital (AD) or input/output (I/O) ports that are operatively coupled to the button 20 via the feedback line 51 for a better and more exact control and empowering of both the button and the wires. This is done by couple back X- and Y-information from the button 20 via the feedback line 51, i.e. the movement/positions for the button 20 in the X- and Y-direction (as seen in figs. 1-2 and 4) is/are fed back to the control unit 52 via the AD or I/O ports, whereby the control unit 52 controls the resistance in the button 20, i.e. the force feedback in the button/joy-stick, and the empowering of the wires in response thereto.

As an example, the first wire 30a may be empowered so that it contracts in one direction when heated by supplied power from its power amplifier 50 and its associated spring 40a pulls in the same direction so that when the power supply to the first wire 30a is interrupted, the wire 30a cools and the other springs 40b and 40c and/or the other wires 30b and 30c extend the first wire 30a by pulling in different, i.e. other directions than the first wire. Furthermore, two of the wires, e.g. 30a and 30b may contract first and the third wire 30c may contract after the first ones for extending them. In the first embodiment, the wires 30a, 30b, 30c contract and the springs 40a, 40b, 40c pull along the directions corresponding to their 120°-distribution, either simultaneously in pairs or separately and/or in an alternating manner. In the second embodiment, the wires 30a, 30b, 30c, 30d may be empowered in different ways. One way is to empower each wire separately and/or alternately, another way is to empower a pair of wires, e.g. wires 30a and 30b, so that they contract in one direction being perpendicular to the contracting direction of the other pair 30c and 30d when they contract. Another way is to empower a first pair of wires 30a and 30c alternately so that they contract in opposite directions but not simultaneously in one plane, while the other pair of wires 30b and 30d also contract in opposite directions to each other but in a plane being perpendicular to the plane of movement for the first pair of wires 30a and 30c. This also means that the springs 40a and 40c of the first pair of wires 30a and 30c cooperate with their twin wire, i.e. spring 40a cooperates with wire 30a while it counteracts the wire 30c opposite wire 30a. The same goes for the springs 40b and 40d and wires 30b and 30d of the other pair. Moreover, in other embodiments, only one or more springs 40a, 40b, 40c could be used for pulling in one direction while only one or more wires 30a, 30b, 30c could pull in another direction, e.g. opposite the pulling direction for the springs.

In the embodiments of figs 1 and 2, a method for actuating the button 20 and providing tactile feedback to the finger via a touch surface of the button is performed by detecting a touch or actuation of the button 20, converting this detection into a signal, sending the signal via the feedback line 51 and receiving the signal corresponding to the touch at the A/D or I/O ports, and supplying power to one or more memory metal wires 30a, 30b, 30c, 30d upon receipt of the signal and in accordance therewith by means of the control unit 52 empowering the associated power amplifiers 50, and thereby actuating the button in response to the power being provided to the wires.

Fig 3 is a schematic view of the exemplary portable electronic device or mobile terminal 1 with the input system/device 10 according to the invention. As used herein, the terms "portable electronic device" or "mobile terminal" may include a cellular radiotelephone 1 as in fig 3 but may also be, e.g. a Personal Communications System (PCS) terminal that may combine a cellular radiotelephone with data processing, facsimile and data communications capabilities; a personal digital assistant (PDA) that can include a radiotelephone, pager, Internet/Intranet access, Web browser, organizer, calendar and/or a Global Positioning System (GPS) receiver; and a conventional laptop and/or palmtop receiver or other appliance that includes a radiotelephone transceiver. Mobile terminals may also be referred to as "pervasive computing" devices and may also include cameras. It should also be understood that the invention may also be implemented in other devices or systems that include input systems or input devices that are connected to a device remotely therefrom no physical connection to the input system, e.g. wirelessly.

A muscle wire 30a, 30b, 30c, 30d is fabricated from a material that changes shape or size when the material is heated beyond a particular temperature. The particular temperature needed to change the shape/size depends on the particular material. In one implementation, each muscle wire may be made of an alloy that is designed to contract (i.e. a fixed length becomes shorter) when the wire 30a, 30b, 30c, 30d is heated beyond a threshold temperature. In addition, the alloy may be fabricated to have poor conductivity (e.g. have resistive characteristics). In this manner, when power is applied to wire, the wire becomes heated beyond the threshold temperature, thereby causing the wire to contract.

Wire 30a, 30b, 30c, 30d, consistent with the invention, may contract about 3% to 5% when heated beyond the threshold temperature. In an exemplary implementation, the threshold temperature may range from about 88 to 98 degrees Celsius. The wire, consistent with the invention, may also relax (i.e. return to the pre-heated state) at a temperature ranging from about 62 degrees to 72 degrees Celsius.

The table below illustrates exemplary characteristics of wire 30a, 30b, 30c, 30d that may be used in implementations consistent with the invention.

| | | |
|---|---|---|
| Wire diameter (millimeters) | 0.05 | 0.125 |
| Resistance (ohms/meter) | 510 | 70 |
| Typical power (watts/meter) | 1.28 | 4.4 |
| Contraction speed at typical power (seconds) | 1 | 1 |
| Maximum recovery force (grams) | 117 | 736 |
| Deformation force (grams) | 8 | 43 |
| Heat capacity (Joules/g) | 0.32 | 0.32 |

In a typical application, the electrical energy fed to the muscle wire 30a, 30b, 30c, 30d is a pulse of amplitude 5 Volts, a current of 300 mA during 70 ms.

## Claims

1. An input device (10), being provided with means for detecting the touch of a finger and means for providing a tactile feedback to the finger to acknowledge an activation of a touch surface of the input device (10), **characterized in that** the means for providing a tactile feedback comprises at least three elongate objects of shape memory metal (30a, 30b, 30c, 30d), each of the objects (30a, 30b, 30c, 30d) being arranged to cooperate operatively with at least one biasing means (40) and to contract in a different direction than the other elongate objects of shape memory metal (30a, 30b, 30c, 30d) when providing the tactile feedback to the finger.

2. The input device (10) according to claim 1, wherein the elongate objects of shape memory metal (30a, 30b, 30c, 30d) are muscle wires arranged to be energised in response to the touch by a finger such that the wires contract in different directions and tactile feedback in the form of mechanical energy resulting from the differently directed contractions is mediated to the touch surface, arranged to make contact with the finger.

3. The input device (10) according to claim 2, wherein each of the muscle wires (30a, 30b, 30c, 30d) is arranged to convey a motion directed from the touch surface.

4. The input device (10) according to claim 2, wherein each of the biasing means (40) is arranged to convey a motion directed from the touch surface.

5. The input device (10) according to any of the preceding claims, wherein each muscle wire (30a, 30b, 30c, 30d) and its associated biasing means (40) are arranged in parallel with each other.

6. The input device (10) according to claim 2, comprising four muscle wires (30a, 30b, 30c, 30d), independently controllable, and arranged in pairs, wherein each pair is arranged to convey a motion of the touch surface in one plane, which planes are perpendicular to each other.

7. The input device (10) according to claim 1 or 6, wherein the muscle wires (30a, 30b, 30c, 30d) in each pair are arranged to convey a motion of the touch surface in opposite directions to each other.

8. The input device (10) according to claim 2, where the conveying of a motion is achieved by attaching a first end of each wire (30a, 30b, 30c, 30d) at the touch surface and attaching a second end of each wire (30a, 30b, 30c, 30d) to an anvil for enabling the conveying of the increased tension in the muscle wire to the touch surface.

9. The input device (10) according to claim 8, where a first end of each biasing means (40) is attached at the touch surface and a second end of each biasing means (40) is attached to an anvil for enabling the biasing means (40) to cooperate with the associated muscle wire (30a, 30b, 30c, 30d) and to at least partly counteract the contraction of the other muscle wires (30a, 30b, 30c, 30d).

10. The input device (10) according to claim 2, wherein a touch sensor is connected to a touch determination device for deciding when the touch surface is touched, the touch determination device is further connected to an input of, and provides control signals to, a muscle wire heating unit having an output connected to each muscle wire (30a, 30b, 30c, 30d) for providing suitable heating current to the muscle wire (30a, 30b, 30c, 30d).

11. The input device (10) according to claim 2, wherein tactile feedback in the form of mechanical energy is mediated to the touch surface as a mechanical energy selected from a tactile feedback patterns group consisting of: one short twitch, two or more short twitches, vibration of one or different frequencies, and vibration of rising and falling amplitude, and combinations thereof.

12. A method for providing a tactile feedback to a finger through a touch surface on an input device (10), comprising:
- detecting a touch of the finger;
- converting the touch of the finger into a signal corresponding thereto **characterized in that** the method further comprises:
- providing power to at least one of at least three elongate memory metal objects (30a, 30b, 30c, 30d), each being arranged to cooperate operatively with at least one biasing means (40), connected to the touch surface upon receipt of the signal; and
- moving the touch surface by means of the at least one of said at least three memory metal objects (30a, 30b, 30c, 30d) exerting a force on the touch surface and said at least one biasing means (40) exerting a force in a different direction other than the force exerted by the at least one memory metal object (30a, 30b, 30c, 30d), in response to the power being provided to the memory metal object (30a, 30b, 30c, 30d) such that a tactile feedback for the finger is achieved when touching the surface.

13. The method of claim 12, comprising: empowering four memory metal objects (30a, 30b, 30c, 30d) in pairs such that each pair of memory metal objects (30a, 30b, 30c, 30d) actuates a motion of the touch surface in one plane being perpendicular to the other plane.

## Patentansprüche

1. Eingabeeinrichtung (10), die mit einem Mittel zum Erfassen des Berührens eines Fingers und einem Mittel zum Bereitstellen eines taktilen Feedbacks zu dem Finger, um ein Aktivieren einer Berührungsoberfläche der Eingabeeinrichtung (10) zu bestätigen, versehen ist, **dadurch gekennzeichnet, dass** das Mittel zum Bereitstellen eines taktilen Feedbacks mindestens drei längliche Objekte aus Formgedächtnismetall (30a, 30b, 30c, 30d) aufweist, wobei jedes der Objekte (30a, 30b, 30c, 30d) eingerichtet ist, um betrieblich mit mindestens einem Vorspannmittel (40) zusammenzuwirken und sich in eine Richtung zusammenzuziehen, die von der der anderen länglichen Objekte aus Formgedächtnismetall (30a, 30b, 30c, 30d) unterschiedlich ist, wenn das taktile Feedback zu dem Finger bereitgestellt wird.

2. Eingabeeinrichtung (10) nach Anspruch 1, wobei die länglichen Objekte aus Formgedächtnismetall (30a, 30b, 30c, 30d) Muskeldrähte sind, die eingerichtet sind, um als Reaktion auf die Berührung durch einen Finger derart angesteuert zu werden, dass sich die Geräte in unterschiedliche Richtungen zusammenziehen und taktiles Feedback in der Form mechanischer Energie, die aus den unterschiedlichen ausgerichteten Zusammenziehungen resultiert, zu der Berührungsoberfläche, die eingerichtet ist, um den Finger zu berühren, vermittelt wird.

3. Eingabeeinrichtung (10) nach Anspruch 2, wobei jeder der Muskeldrähte (30a, 30b, 30c, 30d) eingerichtet ist, um eine Bewegung, die von der Berührungsoberfläche gerichtet ist, zu vermitteln.

4. Eingabeeinrichtung (10) nach Anspruch 2, wobei jedes der Vorspannmittel (40) eingerichtet ist, um eine Bewegung, die von der Berührungsoberfläche gerichtet ist, zu vermitteln.

5. Eingabeeinrichtung (10) nach einem der vorhergehenden Ansprüche, wobei jeder Muskeldraht (30a, 30b, 30c, 30d) und seine dazugehörenden Vorspannmittel (40) parallel zueinander eingerichtet sind.

6. Eingabeeinrichtung (10) nach Anspruch 2, die vier Muskeldrähte (30a, 30b, 30c, 30d) aufweist, die unabhängig steuerbar sind und in Paaren eingerichtet sind, wobei jedes Paar eingerichtet ist, um eine Bewegung der Berührungsoberfläche in einer Ebene zu vermitteln, wobei die Ebenen zueinander senkrecht sind.

7. Eingabeeinrichtung (10) nach Anspruch 1 oder 6, wobei die Muskeldrähte (30a, 30b, 30c, 30d) in jedem Paar eingerichtet sind, um eine Bewegung der Berührungsoberfläche in entgegengesetzte Richtungen zueinander zu vermitteln.

8. Eingabeeinrichtung (10) nach Anspruch 2, wobei das Vermitteln einer Bewegung erzielt wird, indem ein erstes Ende jedes Drahts (30a, 30b, 30c, 30d) an der Berührungsoberfläche befestigt ist, und indem ein zweites Ende jedes Drahts (30a, 30b, 30c, 30d) an einem Amboss befestigt ist, um das Vermitteln der gesteigerten Spannung in dem Muskeldraht zu der Berührungsoberfläche zu ermöglichen.

9. Eingabeeinrichtung (10) nach Anspruch 8, wobei ein erstes Ende jedes Vorspannmittels (40) an der Berührungsoberfläche befestigt ist, und ein zweites Ende jedes Vorspannmittels (40) an einem Amboss befestigt ist, um es dem Vorspannmittel (40) zu ermöglichen, mit dem dazugehörenden Muskeldraht (30a, 30b, 30c, 30d) zusammenzuwirken und dem Zusammenziehen der anderen Muskeldrähte (30a, 30b, 30c, 30d) mindestens teilweise entgegenzuwirken.

10. Eingabeeinrichtung (10) nach Anspruch 2, wobei ein Berührungssensor mit einer Berührungsbestimmungsvorrichtung verbunden ist, um zu entscheiden, wenn die Berührungsoberfläche berührt wird, wobei die Berührungsbestimmungsvorrichtung ferner mit einem Eingang einer Muskeldraht-Heizeinheit verbunden ist und dieser Steuersignale liefert, die einen Ausgang aufweist, die mit jedem Muskeldraht (30a, 30b, 30c, 30d) verbunden ist, um geeigneten Heizstrom zu dem Muskeldraht (30a, 30b, 30c, 30d) bereitzustellen.

11. Eingabeeinrichtung (10) nach Anspruch 2, wobei taktiles Feedback in der Form mechanischer Energie zu der Berührungsoberfläche als eine mechanische Energie vermittelt wird, die aus einer Gruppe taktiler Feedbackmuster bestehend aus Folgenden ausgewählt ist: ein kurzes Zucken, zwei oder mehr kurze Zucken, Vibration mit einer oder unterschiedlichen Frequenzen und Vibrationen mit ansteigender und abfallender Amplitude und Kombinationen davon.

12. Verfahren zum Bereitstellen eines taktilen Feedbacks zu einem Finger durch eine Berührungsoberfläche auf einer Eingabeeinrichtung (10), das Folgendes aufweist:
- Erfassen eine Berührung des Fingers;
- Umwandeln der Berührung des Fingers in ein entsprechendes Signal,
**dadurch gekennzeichnet, dass** das Verfahren ferner Folgendes aufweist:
- Bereitstellen von Leistung zu mindestens einem von mindestens drei länglichen Formgedächtnismetallobjekten (30a, 30b, 30c, 30d), die jeweils eingerichtet sind, um betrieblich mit mindestens einem Vorspannmittel (40) zusammenzuwirken, das mit der Berührungsoberfläche beim Empfangen des Signals verbunden wird; und
- Bewegen der Berührungsoberfläche mittels mindestens einem der mindestens drei Formgedächtnismetallobjekte (30a, 30b, 30c, 30d), die eine Kraft auf die Berührungsoberfläche ausüben, und wobei mindestens ein Vorspannmittel (40) eine Kraft in eine unterschiedliche Richtung als die Kraft, die von dem mindestens einen Formgedächtnismetallobjekt (30a, 30b, 30c, 30d) ausgeübt wird, als Reaktion auf Bereitstellen von Leistung zu dem Formgedächtnismetallobjekt (30a, 30b, 30c, 30d) ausübt, so dass beim Berühren der Oberfläche ein taktiles Feedback für den Finger erzielt wird.

13. Verfahren nach Anspruch 12, das Folgendes aufweist: Befähigen von vier Formgedächtnismetallobjekten (30a, 30b, 30c, 30d) in Paaren derart, dass jedes Paar von Formgedächtnismetallobjekten (30a, 30b, 30c, 30d) eine Bewegung der Berührungsoberfläche in einer Ebene, die zu der anderen Ebene senkrecht ist, betätigt.

## Revendications

1. Dispositif d'entrée (10), qui est doté de moyens pour détecter le toucher d'un doigt et de moyens pour fournir un retour tactile au doigt afin d'accuser réception d'une activation d'une surface tactile du dispositif d'entrée (10), **caractérisé en ce que** les moyens pour fournir un retour tactile comprennent au moins trois objets allongés en métal à mémoire de forme (30a, 30b, 30c, 30d), chacun des objets (30a, 30b, 30c, 30d) étant agencé pour coopérer de manière opérationnelle avec au moins un moyen de sollicitation (40) et pour se contracter dans une direction différente des autres objets allongés en métal à mémoire de forme (30a, 30b, 30c, 30d) lorsque l' on fournit le retour tactile au doigt.

2. Dispositif d'entrée (10) selon la revendication 1, dans lequel les objets allongés en métal à mémoire de forme (30a, 30b, 30c, 30d) sont des fils musculaires agencés pour être excités en réponse au toucher par un doigt de sorte que les fils musculaires se contractent dans des directions différentes et que le retour tactile sous la forme d'énergie mécanique provenant des contractions dirigées différemment sert d'intermédiaire à la surface tactile, agencée pour établir le contact avec le doigt.

3. Dispositif d'entrée (10) selon la revendication 2, dans lequel chacun des fils musculaires (30a, 30b, 30c, 30d) est agencé pour transmettre un mouvement dirigé à partir de la surface tactile.

4. Dispositif d'entrée (10) selon la revendication 2, dans lequel chacun des moyens de sollicitation (40) est agencé pour transmettre un mouvement dirigé à partir de la surface tactile.

5. Dispositif d'entrée (10) selon l'une quelconque des revendications précédentes, dans lequel chaque fil musculaire (30a, 30b, 30c, 30d) et ses moyens de sollicitation (40) associés sont agencés parallèlement les uns par rapport aux autres.

6. Dispositif d'entrée (10) selon la revendication 2, comprenant quatre fils musculaires (30a, 30b, 30c, 30d), indépendamment contrôlables, et agencés en paires, dans lequel chaque paire est agencée pour transmettre un mouvement de la surface tactile dans un plan, lesquels plans sont perpendiculaires entre eux.

7. Dispositif d'entrée (10) selon la revendication 1 ou 6, dans lequel les fils musculaires (30a, 30b, 30c, 30d) dans chaque paire sont agencés pour transmettre un mouvement de la surface tactile dans des directions opposées entre elles.

8. Dispositif d'entrée (10) selon la revendication 2, dans lequel la transmission d'un mouvement est obtenue en fixant une première extrémité de chaque fil musculaire (30a, 30b, 30c, 30d) au niveau de la surface tactile et en fixant une seconde extrémité de chaque fil (30a, 30b, 30c, 30d) à une enclume pour permettre la transmission de la tension accrue dans le fil musculaire jusqu'à la surface tactile.

9. Dispositif d'entrée (10) selon la revendication 8, dans lequel une première extrémité de chaque moyen de sollicitation (40) est fixée à la surface tactile et une seconde extrémité de chaque moyen de sollicitation (40) est fixée à une enclume pour permettre au moyen de sollicitation (40) de coopérer avec le fil musculaire (30a, 30b, 30c, 30d) associé et pour au moins contrecarrer partiellement la contraction des autres fils musculaires (30a, 30b, 30c, 30d).

10. Dispositif d'entrée (10) selon la revendication 2, dans lequel un capteur tactile est raccordé à un dispositif de détermination de toucher pour décider du moment où la surface tactile est touchée, le dispositif de détermination de toucher est en outre raccordé à une entrée de, et fournit des signaux de commande à, une unité de chauffage de fil musculaire ayant une sortie raccordée à chaque fil musculaire (30a, 30b, 30c, 30d) pour fournir le courant chauffant approprié au fil musculaire (30a, 30b, 30c, 30d).

11. Dispositif d'entrée (10) selon la revendication 2, dans lequel le retour tactile se présentant sous la forme d'énergie mécanique sert d'intermédiaire à la surface tactile en tant qu'énergie mécanique sélectionnée à partir d'un groupe de modèles de retour tactile se composant de : une secousse courte, deux ou plus de deux secousses courtes, la vibration d'une ou de fréquences différentes, et la vibration d'amplitude de montée et de chute, et leurs combinaisons.

12. Procédé pour fournir un retour tactile à un doigt par le biais d'une surface tactile sur un dispositif d'entrée (10), comprenant les étapes consistant à .
- détecter un toucher du doigt ;
- convertir le toucher du doigt en un signal y correspondant,
le procédé étant **caractérisé en ce qu'**il comprend en outre les étapes consistant à :
- fournir de l'énergie à au moins l'un d'au moins trois objets (30a, 30b, 30c, 30d) en métal à mémoire de forme, chacun étant agencé pour coopérer de manière opérationnelle avec au moins un moyen de sollicitation (40), raccordé à la surface tactile suite à la réception du signal ; et
- déplacer la surface tactile au moyen de l'au moins un desdits au moins trois objets (30a, 30b, 30c, 30d) en métal à mémoire de forme exerçant une force sur la surface tactile et ledit au moins un moyen de sollicitation (40) exerçant une force dans une direction différente de la force exercée par l'au moins un objet (30a, 30b, 30c, 30d) en métal à mémoire de forme, en réponse à l'énergie qui est fournie à l'objet (30a, 30b, 30c, 30d) en métal à mémoire de forme de sorte qu'un retour tactile pour le doigt est obtenu lorsque l'on touche la surface.

13. Procédé selon la revendication 12, comprenant l'étape consistant à donner davantage d'autonomie à quatre objets (30a, 30b, 30c, 30d) en métal à mémoire de forme en paires de sorte que chaque paire d'objets (30a, 30b, 30c, 30d) en métal à mémoire de forme actionne un mouvement de la surface tactile dans un plan qui est perpendiculaire à l'autre plan.
